# EUROPÄISCHE PATENTSCHRIFT

(11) **EP 1 420 502 B1**
(45) Veröffentlichungstag und Bekanntmachung des Hinweises auf die Patenterteilung: **20.06.2012**
(21) Anmeldenummer: 03024271.3
(22) Anmeldetag: 23.10.2003
(51) Int. Cl.: H02K 3/34, H02K 5/15, H02K 5/173

(54) **Elektromotor**
Electric motor
Moteur électrique

(30) Priorität: 15.11.2002 DE 10253235
(43) Veröffentlichungstag der Anmeldung: 19.05.2004
(73) Patentinhaber: Festool GmbH, 73240 Wendlingen (DE)
(72) Erfinder: Fleischmann, Bernd, Dipl.-Ing., 73230 Kirchheim (DE)
(74) Vertreter: Bregenzer, Michael

(56) Entgegenhaltungen:
- EP-A2- 0 952 658
- EP-A2- 1 154 544
- DE-A1- 4 021 599
- DE-A1- 19 623 460
- GB-A- 2 172 444
- US-A- 3 873 861
- US-A- 4 384 226

## Beschreibung

Die Erfindung betrifft einen schleifring- und kommutatorlosen Elektromotor gemäß dem Oberbegriff des Anspruchs 1.

Ein derartiger Elektromotor geht aus EP 0 952 658 A2 hervor. Er Stator enthält vier vergossene Statorzähne und ist mit einem zylindrischen Rahmen umgeben.

Aus GB 2 172 444 A und DE 40 21 599 A1 gehen Elektromotoren hervor, deren Pole in Schalen aus elektrisch isolierendem Material aufgenommen sind.

Aus EP 1 154 544 A2 geht ein Stator mit einem Blechpaket hervor, das mit einer Kunststoffbeschichtung isoliert ist.

US 4,384,226, DE 196 23 460 A1 und US 3,873,861 zeigen Elektromotoren, bei denen in einen Statorkern eingelegte Wicklungen mit einem elektrisch isolierenden Kunststoff umgossen sind.

Elektromotoren dieser Art - es handelt sich um elektronisch kommutierte Motoren oder um Drehstrommotoren - weisen zur Lagerung der Rotorwelle Drehlager auf, die an stirnseitigen Lagerschilden sitzen, die mit Bezug auf den Stator feststehend angeordnet sind.

Die Herstellung und die Montage solcher Lagerschilde ist mit einem nicht unbeträchtlichen Aufwand verbunden.

Der vorliegenden Erfindung liegt daher die Aufgabe zugrunde, einen Elektromotor mit den eingangs genannten Merkmalen zu schaffen, der hinsichtlich der Halterung der Drehlager einen möglichst einfachen und kostengünstig zu realisierenden Aufbau aufweist.

Diese Aufgabe wird durch einen Elektromotor gemäß der technischen Lehre des Anspruchs 1 gelöst.

Der ohnehin vorhandene Isolierbelag wird also lediglich stirnseitig vor den Stator vorgezogen und erhält dort eine eine Drehlageraufnahme bildende Gestalt. Der Haltekörper wird bei der Statorfertigung einstückig angeformt, so dass kein besonderer Mehraufwand erforderlich ist. Dies ist mit Bezug auf die seitherige gesonderte Lagerschildfertigung und deren Montage am Motor um etliches billiger.

Diesen Vorteil erhält man bereits, wenn nur eines der üblicherweise zwei Drehlager auf diese Weise gehalten wird.

Bei einer bevorzugten Ausführungsform ist vorgesehen, dass der jeweilige Haltekörper entweder für sich oder zusammen mit dem zugeordneten Drehlager eine den Innenraum des Stators nach außen hin abdichtende Abschlusswand bildet. Hierfür ist der einstückig angeformte Haltekörper bestens geeignet. Auf diese Weise wird das Eindringen von Fremdpartikeln in den Luftspalt zwischen Rotor und Stator vermieden. Dies ist bei seitherigen Motoren anders. Bei diesen ist keine ausreichende Dichtheit gewährleistet, so dass Fremdpartikel eintreten können, die im Falle von Eisenpartikeln besonders nachteilig sind, da diese aufgrund der auf sie ausgeübten Magnetkraft im Inneren des Motors verbleiben und nicht mehr nach außen gelangen können.

Weitere zweckmäßige Ausgestaltungen der Erfindung sind in den Unteransprüchen angegeben.

Ein Ausführungsbeispiel der Erfindung wird nun anhand der Zeichnung erläutert. Es zeigen:

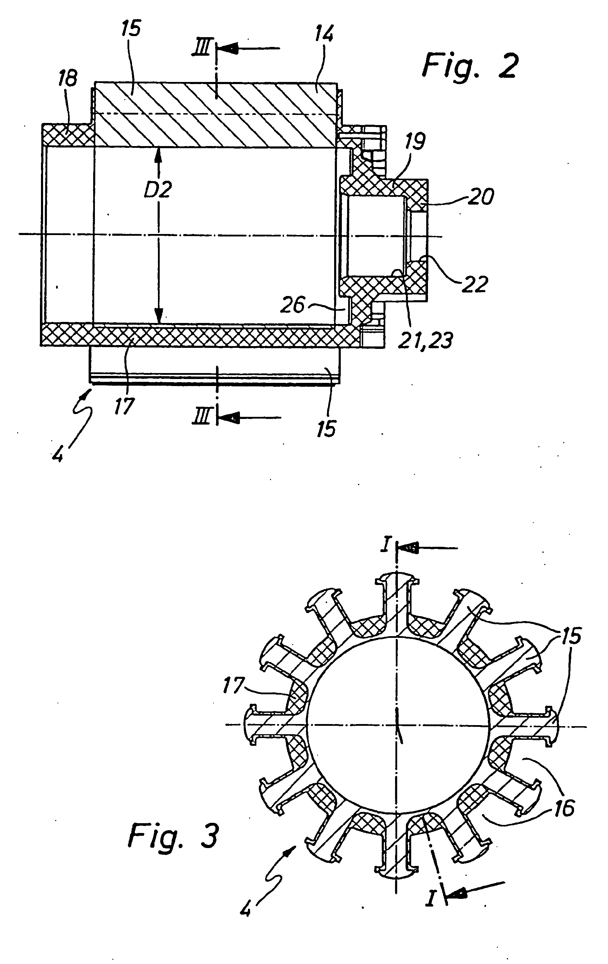

- Figur 1: einen erfindungsgemäßen Elektromotor im Längsschnitt entsprechend der Schnittlinie I-I in Figur 3,
- Figur 2: den Stator des Elektromotors nach Figur 1 in gesonderter Darstellung im der Figur 1 entsprechenden Längsschnitt und
- Figur 3: den Stator nach Figur 2 im Querschnitt gemäß der Schnittlinie III-III in Figur 2.

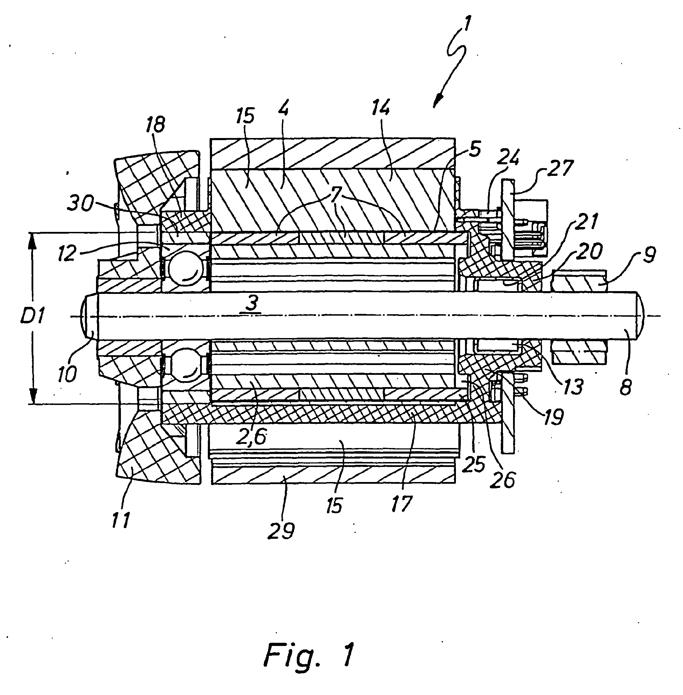

Aus Figur 1 geht ein elektronisch kommutierter Elektromotor 1 hervor, der somit - dies trifft auch auf einen Drehstrommotor zu - ohne Schleifring und Kommutator ausgebildet ist.

Der Elektromotor 1 enthält koaxial zueinander einen innen liegenden Rotor 2, der in üblicherweise drehfest mit einer zentralen Rotorwelle 3 verbunden ist, sowie einen den Rotor 2 umschließenden Stator 4. Zwischen dem Rotor 2 und dem Stator 4 ist ein ringförmig umlaufender Luftspalt 5 vorhanden, so dass der Rotor 2 innerhalb des Stators 4 rotieren kann.

Der Rotor 2 besteht in üblicher Weise aus einem Rotor-Blechpaket 6, wobei am Außenumfang des Rotors Rotor-Magnetteile 7 angeordnet sind, die - durch den Luftspalt 5 getrennt - dem Innenumfang des Stators 4 gegenüberliegen.

Die drehfest mit dem Rotor 2 verbundene Rotorwelle 3 durchgreift beim Ausführungsbeispiel den Rotor 2 und steht beidenends vor den Rotor 2 vor. Dabei trägt die Rotorwelle 3 an ihrem einen vorstehenden Endbereich 8 ein Antriebsritzel 9 und an ihrem anderen vorstehenden Endbereich 10 ein Lüfterrad 11 zur Erzeugung eines den Motor kühlenden Luftstroms. Die weitere Ausgestaltung des Rotors 2 und der Rotorwelle 3 ist im vorliegenden Zusammenhang von untergeordneter Bedeutung, so dass auf die bei solchen Motoren üblichen Rotoren und Rotorwellen verwiesen wird.

Die Rotorwelle 3 ist beiderseits des Rotors 2 jeweils mittels eines Drehlagers 12 bzw. 13 drehbar gelagert. Dabei befindet sich das eine Drehlager 12 in axialer Richtung zwischen der Nabe des Lüfterrades 11 und dem Rotor 2 und das andere Drehlager 13 zwischen dem Rotor 2 und dem Antriebsritzel 9. Beim Ausführungsbeispiel handelt es sich im Falle des Drehlagers 12 um ein Kugellager, insbesondere ein Rillenkugellager, und im Falle des Drehlagers 13 um ein Nadellager. Dies könnte prinzipiell jedoch auch anders sein. Zu dem Drehlager 12 gehört ein an seinem Außenumfang angeordneter Ringkörper 30 aus nicht magnetisierbarem Material, um einen magnetischen Schluss zwischen Stator 4 und Rotor 2 über das Drehlager 12 zu vermeiden.

Der Stator 4 wird von einem Statorkern 14 aus magnetisierbarem Material, üblicherweise ferromagnetisches Material wie Eisen, und einer vom Statorkern 14 getragenen Statorwicklung gebildet. Die sich aus mehreren einzelnen Spulen zusammensetzende Statorwicklung ist der Einfachheit halber nicht dargestellt. Sie ist üblicher Bauart und daher für einen Fachmann ohne weiteres vorstellbar.

Der Statorkern 14 weist radial innen eine kreiszylindrische Gestalt sowie nach radial außen hin abstehende, über den Umfang verteilt angeordnete und sich parallel zur axialen Richtung erstreckende Polelemente 15 auf, von denen nur einige mit der Bezugsziffer 15 bezeichnet worden sind. Das die Spulen der Statorwicklung bildende Drahtmaterial ist um die einzelnen stegartigen Polelemente 15 gewickelt und verläuft in den zwischen den Polelementen 15 vorhandenen Statorkanälen 16. Die Spulen der Statorwicklung sind in üblicher Weise beschaltet, so dass sich beim Betrieb ein rotierendes Magnetfeld ergibt, das den Rotor 2 sozusagen mitnimmt.

Der Stator 4 weist ferner in üblicher Weise an seinem Außenumfang ein umlaufendes Rückschlussteil 29 auf, das um die Polelemente 15 verläuft und die Statorkanäle 16 außen überdeckt. Das Rückschlussteil 29 kann paketartig aufgebaut sein.

Mit ihm wird ein magnetischer Rückschluss am Stator 4 erreicht.

Der Statorkern 14 weist an seinen der Statorwicklung zugewandten Flächen einen fest aufgebrachten, den Statorkern 14 gegen die Statorwicklung elektrisch isolierenden Kunststoff-Isolierbelag 17 auf, so dass die Statorkanäle 16 mit dem Isolierbelag 17 ausgekleidet sind. An diesen Isolierbelag 17 ist an den beiden Stirnseiten des Statorkerns 14 jeweils ein Haltekörper 18, 19 einstückig angesetzt, der das jeweils zugewandte Drehlager 12, 13 an Ort und Stelle hält. Das Kunststoffmaterial des Isolierbelags 17 ist also an den beiden Stirnseiten des Statorkerns 14 in axialer Richtung vorgezogen, so dass der genannte Haltekörper 18, 19 zum Halten des jeweiligen Drehlagers 12, 13 gebildet wird. Auf diese Weise entfallen gesondert gefertigte und zu montierende Lagerschilde oder dergleichen, mit denen die Drehlager üblicherweise gehalten werden.

Beim Ausführungsbeispiel ist wie erwähnt, an jedem axialen Ende des Stators ein angeformter Haltekörper 18, 19 vorhanden. Prinzipiell und in Abhängigkeit des Motortyps könnte jedoch auch nur ein solcher Haltekörper vorgesehen werden.

Beide Haltekörper 18, 19 umgreifen das zugehörige Drehlager 12, 13 ringartig. Ansonsten unterscheiden sich jedoch die beiden Haltekörper 18, 19.

Der Haltekörper 19 erstreckt sich in radialer Richtung nach innen über den zwischen dem Stator 4 und dem Rotor 2 vorhandenen Luftspalt 5 hinweg und übergreift die zugewandte Rotor-Stirnseite zumindest ein Stück weit. Dabei erstreckt sich der Haltekörper 19 in radialer Richtung nach innen hin bis zur Rotorwelle 3 und umschließt diese mit einem das Rotieren der Rotorwelle 3 zulassendem Spiel. In axialer Richtung anschließend an die sich bis zur Rotorwelle 3 erstreckende und diese mit Rotationsspiel umschließende Ringpartie 20 bildet der Haltekörper 19 einen das Drehlager 13 aufnehmenden Ringraum 21. Zweckmäßigerweise ist der Ringraum 21 an der dem Rotor 2 zugewandten Seite offen und an der dem Rotor 2 entgegengesetzten Seite durch die Ringpartie 19 begrenzt. Dies ist herstellungstechnisch einfacher.

Auf diese Weise bildet der Haltekörper 19 sozusagen einen einstückig angeformten Lagerschild mit einer axialen Durchtrittsausnehmung für den Durchtritt der Rotorwelle 3 und die Aufnahme des Drehlagers 13. Diese Durchtrittsausnehmung ist gestuft, so dass sie sich aus einer dem Rotor 2 abgewandten Partie 22 kleineren Durchmessers und einer dem Rotor 2 zugewandten Partie 23 größeren Durchmessers zusammensetzt. Die erstgenannte Ausnehmungspartie 22 wird von der Ringpartie 20 des Haltekörpers 19 umschlossen. Die im Durchmesser erweiterte Ausnehmungspartie 23 bildet den das Drehlager 13 aufnehmenden Ringraum 21.

Auf diese Weise stellt der Haltekörper 19 eine den den Rotor 2 aufnehmenden Innenraum des Stators 4 nach außen hin abdichtende Abschlusswand dar, so dass der genannte Innenraum an dieser Stirnseite gekapselt ist.

Der Haltekörper 19 stellt ferner einen Träger für die bei solchen Elektromotoren übliche Sensoreinrichtung zur Positionserkennung des Rotors 2 dar, mit deren Hilfe die Ströme in der Statorwicklung in Abhängigkeit von der Rotorstellung elektronisch weiter geschaltet werden. Diese Sensoreinrichtung enthält beim Ausführungsbeispiel mehrere über den Umfang verteilt angeordnete Magnetfeldsensoren 24, die mit den in Umfangsrichtung mit Abstand zueinander angeordneten Rotor-Magnetteilen 7 zusammenwirken. Im dargestellten Falle sind die Rotor-Magnetteile 7 an der dem Haltekörper 19 und somit den Magnetfeldsensoren 24 zugewandten Stirnseite des Rotors 2 in axialer Richtung vorstehend angeordnet, so dass die vorstehenden Bereiche 25 der Rotor-Magnetteile 7 eine größere Nähe zu den Magnetfeldsensoren 24 einnehmen. Der Haltekörper 19 weist an seiner dem Rotor 2 zugewandten Seite eine Ringnut 26 auf, in der die vorstehenden Bereiche 25 der Rotor-Magnetteile 7 umlaufen.

An dem Haltekörper 19 ist ferner die Verschaltung der einzelnen Spulen der Rotorwicklung angeordnet.

Dabei können die Magnetfeldsensoren 24 und die Verschaltung der Spulen an einer Platine 27 sitzen, die an dem Haltekörper 19 befestigt ist.

Bei dem an der entgegengesetzten Seite angeordneten Haltekörper 18 sind die Verhältnisse anders. In diesem Falle weist das zugewandte Drehlager 12 einschließlich des Ringkörpers 30 einen Außendurchmesser D1 auf, der gleich dem Innendurchmesser D2 des Stators 4 ist, so dass der Luftspalt 5 zwischen Rotor 2 und Stator 4 überdeckt wird. Der Durchmesser des Drehlagers 12 könnte prinzipiell auch größer als der Innendurchmesser des Stators sein. Der Haltekörper 18 umschließt das Drehlager 12 ringförmig. Dabei weist der Haltekörper 18 eine im Wesentlichen zylindrische Gestalt auf.

Auf diese Weise bildet der Haltekörper 18 zusammen mit dem Drehlager 12 (der Ringkörper 30 stellt einen Bestandteil des Drehlagers 12 dar) eine den Innenraum des Stators 4 und somit den Luftspalt 5 an dieser Stirnseite abdichtende Abschlusswand, so dass auch an dieser Seite keine Fremdpartikel eindringen können.

Je nach den Erfordernissen und Gegebenheiten könnte der Ringkörper 30 auch weggelassen werden. Das eigentliche Drehlager 12 müsste dann einen entsprechend größeren Durchmesser aufweisen.

## Patentansprüche

1. Schleifring- und kommutatorloser Elektromotor, mit einem eine Rotorwelle treibenden Rotor und einem Stator, die koaxial zueinander mit den Rotor umschließendem Stator angeordnet sind, wobei der Stator von einem über den Umfang verteilte Polelemente bildenden Statorkern aus magnetisierbarem Material und einer vom Statorkern getragenen Statorwicklung gebildet wird und der Statorkern an seinen der Statorwicklung zugewandten Flächen einen den Statorkern gegen die Statorwicklung elektrisch isolierenden Kunststoff-Isolierbelag aufweist, wobei an mindestens einer Stirnseite des Statorkerns (14) an den Isolierbelag (17) ein Haltekörper (18, 19) zum Halten eines Drehlagers (12, 13) für die Rotorwelle (3) einstückig angesetzt ist, **dadurch gekennzeichnet, dass** der Haltekörper (18) bei der Statorfertigung einstückig angeformt ist und mindestens ein vom zugeordneten Haltekörper (18) ringförmig umschlossenes Drehlager (12) einen Außendurchmesser aufweist, der größer oder gleich dem Innendurchmesser des Stators (4) ist.

2. Elektromotor nach Anspruch 1, **dadurch gekennzeichnet, dass** sich mindestens ein Haltekörper (19) in radialer Richtung nach innen über den zwischen dem Stator (4) und dem Rotor (2) vorhandenen Luftspalt (5) hinweg erstreckt und die zugewandte Rotor-Stirnseite zumindest ein Stück weit übergreift.

3. Elektromotor nach Anspruch 2, **dadurch gekennzeichnet, dass** sich der Haltekörper (19) in radialer Richtung nach innen hin bis zur Rotorwelle (3) erstreckt.

4. Elektromotor nach Anspruch 3, **dadurch gekennzeichnet, dass** der Haltekörper (19) in axialer Richtung anschließend an eine sich bis zur Rotorwelle (3) erstreckende Ringpartie (20) des Halterkörpers (19) einen das betreffende Drehlager (13) aufnehmenden Ringraum (21) bildet.

5. Elektromotor nach Anspruch 4, **dadurch gekennzeichnet, dass** der Ringraum (21) an der dem Rotor (2) zugewandten Seite offen und an der dem Rotor (2) entgegengesetzten Seite durch die Ringpartie (20) begrenzt ist.

6. Elektromotor nach einem der Ansprüche 1 bis 5, **dadurch gekennzeichnet, dass** das Drehlager (12) einen an seinem Außenumfang angeordneten Ringkörper (30) aus nicht magnetisierbarem Material aufweist.

7. Elektromotor nach einem der Ansprüche 1 bis 6, **dadurch gekennzeichnet, dass** der jeweilige Haltekörper (18 bzw. 19) entweder für sich oder zusammen mit dem zugeordneten Drehlager (12) eine den Innenraum des Stators (4) nach außen hin abdichtende Abschlusswand bildet.

8. Elektromotor nach einem der Ansprüche 1 bis 7, **dadurch gekennzeichnet, dass** an dem mindestens einen Haltekörper (19) eine Sensoreinrichtung (24) zur Positionserkennung des Rotors (2) angeordnet ist.

9. Elektromotor nach einem der Ansprüche 1 bis 8, **dadurch gekennzeichnet, dass** die Polelemente (15) des Statorkerns (14) nach radial außen gerichtet sind.

## Claims

1. Electric motor without slip ring and commutator, with a rotor driving a rotor shaft and a stator, which are mounted coaxially to one another with the stator encompassing the rotor, wherein the stator is formed by a stator core of magnetisable material forming pole elements distributed over the periphery and a stator winding supported by the stator core, and the stator core has on its surfaces which face the stator winding an electrically-insulating plastic insulating covering wherein, on at least one end face of the stator core (14), there is integrally attached to the insulating covering (17) a retaining body (18, 19) for holding a pivot bearing (12, 13) for the rotor shaft (3), **characterised in that** the retaining body (18) is moulded on integrally during stator production and at least one pivot bearing (12) encompassed in ring fashion by the assigned retaining body (18) has an external diameter which is greater than or equal to the internal diameter of the stator (4).

2. Electric motor according to claim 1, **characterised in that** at least one retaining body (19) extends radially inwards over the air gap (5) between the stator (4) and the rotor (2), and overlaps the facing rotor end-face to at least a small extent.

3. Electric motor according to claim 2, **characterised in that** the retaining body (19) extends radially inwards as far as the rotor shaft (3).

4. Electric motor according to claim 3, **characterised in that** the retaining body (19) in the axial direction adjacent to a ring section (20) of the retaining body (19) extending as far as the rotor shaft (3) forms an annular space (21) which accommodates the relevant pivot bearing (13).

5. Electric motor according to claim 4, **characterised in that** the annular space (21) is open on the side facing the rotor (2), and is bounded by the ring section (20) on the side opposite the rotor (2).

6. Electric motor according to any of claims 1 to 5, **characterised in that** the pivot bearing (12) has an annular body (30) of non-magnetisable material on its outer periphery.

7. Electric motor according to any of claims 1 to 6, **characterised in that** the respective retaining body (18 or 19) forms either for itself or together with the assigned pivot bearing (12) a closing wall sealing the interior of the stator (4) towards the outside.

8. Electric motor according to any of claims 1 to 7, **characterised in that** a sensor unit (24) for detecting the position of the rotor (2) is mounted on the retaining body or bodies (19).

9. Electric motor according to any of claims 1 to 8, **characterised in that** the pole elements (15) of the stator core (14) are aligned radially outwards.

## Revendications

1. Moteur électrique sans bagues et sans commutateur, comportant un rotor entraînant un arbre de rotor et un stator, lesquels sont disposés de manière coaxiale l'un par rapport à l'autre avec le stator entourant le rotor, sachant que le stator est formé par un noyau de stator en un matériau magnétisable formant des éléments polaires répartis sur la périphérie et par un enroulement de stator porté par le noyau de stator et que le noyau de stator présente au niveau de ses faces tournées vers l'enroulement de stator une garniture isolante en matière plastique isolant électriquement le noyau de stator par rapport à l'enroulement de stator, sachant qu'un corps de maintien (18, 19) servant à maintenir un palier de rotation (12, 13) pour l'arbre de rotor (3) est placé d'un seul tenant au niveau d'au moins un côté frontal du noyau de stator (14), au niveau de la garniture isolante (17), **caractérisé en ce que** le corps de maintien (18) est formé d'un seul tenant lors de la fabrication du stator, et **en ce qu'**au moins un palier de rotation (12) entouré de manière à présenter une forme annulaire par le corps de maintien (18) associé présente un diamètre extérieur plus grand ou de même longueur que le diamètre intérieur du stator (4).

2. Moteur électrique selon la revendication 1, **caractérisé en ce qu'**au moins un corps de maintien (19) s'étend dans une direction radiale vers l'intérieur au-dessus de l'entrefer (5) présent entre le stator (4) et le rotor (2) et dépasse au moins d'un peu le côté frontal du rotor tourné.

3. Moteur électrique selon la revendication 2, **caractérisé en ce que** le corps de maintien (19) s'étend dans une direction radiale vers l'intérieur jusqu'à l'arbre de rotor (3).

4. Moteur électrique selon la revendication 3, **caractérisé en ce que** le corps de maintien (19) forme dans une direction axiale, suivant directement une partie annulaire (20) du corps de maintien (19) s'étendant jusqu'à l'arbre de rotor (3), un espace annulaire (21) accueillant le palier de rotation (13) concerné.

5. Moteur électrique selon la revendication 4, **caractérisé en ce que** l'espace annulaire (21) est délimité de manière ouverte au niveau du côté tourné vers le rotor (2) et par la partie annulaire (20) au niveau du côté opposé au rotor (2).

6. Moteur électrique selon l'une quelconque des revendications 1 à 5, **caractérisé en ce que** le palier de rotation (12) présente un corps annulaire (30) en un matériau non magnétisable, disposé au niveau de sa périphérie extérieure.

7. Moteur électrique selon l'une quelconque des revendications 1 à 6, **caractérisé en ce que** le corps de maintien (18 ou 19) concerné forme en soi ou conjointement avec le palier de rotation (12) associé une paroi terminale assurant l'étanchéité de l'espace intérieur du stator (4) par rapport à l'extérieur.

8. Moteur électrique selon l'une quelconque des revendications 1 à 7, **caractérisé en ce qu'**un dispositif de détection (24) servant à identifier la position du rotor (2) est disposé au niveau du moins un corps de maintien (19).

9. Moteur électrique selon l'une quelconque des revendications 1 à 8, **caractérisé en ce que** les éléments polaires (15) du noyau de stator (14) sont orientés vers l'extérieur radialement.
